# EUROPEAN PATENT APPLICATION

(11) **EP 4 718 558 A1**
(43) Date of publication of application: **01.04.2026**
(21) Application number: 25196339.3
(22) Date of filing: 18.08.2025
(51) Int. Cl.: H01M 10/0525, H01M 10/0562

(54) **ELECTROLYTE COATING, SOLID-STATE BATTERY AND ELECTRICAL DEVICE**

(30) Priority: 29.09.2024 CN 202411380152
(71) Applicant: AESC Japan Ltd., Yokohama-Shi, Kanagawa 220-0012 (JP)
(72) Inventor: YU, Le, Pudong New Area Shanghai, Shanghai 201315 (CN); QU, Xinxin, Pudong New Area Shanghai, Shanghai 201315 (CN)
(74) Representative: Becker, Eberhard

(57) **Abstract**

Disclosed are an electrolyte coating, a solid-state battery and an electrical device. The electrolyte coating is coated on the surface of a solid-state electrolyte. The solid-state electrolyte includes one or both of a sulfide electrolyte and a halide electrolyte, wherein the electrolyte coating is a copolymer of tridecafluorooctyl methacrylate and n-butyl methacrylate. By coating the electrolyte coating on the surface of the sulfide electrolyte and the halide electrolyte, the present disclosure significantly increases the stability thereof in the air (even with high humidity) on the premise of not substantially affecting the conductivity thereof.

## Description

### BACKGROUND

### Technical Field

Embodiments of the present disclosure relate to the field of batteries, and specifically relate to an electrolyte coating, a solid-state battery and an electrical device.

### Description of Related Art

With the development of new energy, lithium batteries are more commonly applied in daily life and new energy vehicles are popularized as well. Therefore, it is urgent to improve the safety performance and energy density of lithium batteries. Conventional organic electrolytes are flammable, explosive, and prone to leakage, causing lithium batteries to be highly dangerous. The substitution of liquid electrolytes with solid-state electrolytes holds promise for fundamentally resolving battery safety concerns. Among various solid-state electrolytes, sulfide and halide electrolytes are considered the two most promising solid-state electrolyte materials due to exceptional mechanical ductility and high ionic conductivity thereof. However, when sulfide electrolytes are exposed to air, toxic hydrogen sulfide (H₂S) gas is generated, the electrolyte structure is completely damaged, and electrochemical performance is deteriorated. Even though halide electrolytes do not produce toxic gases upon contact with moisture, the decline rate in the conductivity and electrical performance thereof might exceed that of sulfide electrolytes. The aforementioned issues result in high dependence on inert atmospheres or ultra-low dew point dry rooms for performing the synthesis, storage, transportation, and post-processing of sulfide and halide electrolytes, which dramatically increases production costs and reduce operational efficiency, as well as substantially constrains mass production processes thereof.

In summary, the current technology has the following disadvantages:

When sulfide electrolytes are exposed to air, toxic gas H₂S is generated, the electrolyte structure is completely destroyed, and electrochemical performance is degraded. Halide electrolytes undergo hydrolysis after contact with moisture, resulting in significant decline in electrochemical performance. The aforementioned issues result in high dependence on inert atmospheres or ultra-low dew point dry rooms for performing the synthesis, storage, transportation, and post-processing of sulfide and halide electrolytes, which dramatically increases production costs and reduce operational efficiency, as well as substantially constrains mass production processes thereof.

### SUMMARY

Through a surface modification technology, the present disclosure solves the problem of instability of a sulfide electrolyte and a halide electrolyte in the air, and mitigates the influence of moisture in the air on electrochemical performance thereof.

Some embodiments of the present disclosure provide an electrolyte coating. The electrolyte coating is a hydrophobic coating for a solid-state electrolyte. Specifically, the electrolyte coating is coated on a surface of the solid-state electrolyte, and the solid-state electrolyte includes one or both of the sulfide electrolyte and the halide electrolyte, wherein the electrolyte coating is a copolymer of tridecafluorooctyl methacrylate and n-butyl methacrylate. Generally, the sulfide electrolyte and the halide electrolyte are unstable in the air. Through the surface modification technology, that is, by performing surface modification (coating) on the electrolyte coatings of the sulfide electrolyte and the halide electrolyte, the present disclosure may significantly increase the stability thereof in the air (even with high humidity) under the premise of not substantially affecting the conductivity thereof.

In some embodiments, a molar ratio of tridecafluorooctyl methacrylate to n-butyl methacrylate is 1 to 8:1, optionally 2 to 6:1, and further optionally 4:1. When the molar ratio of tridecafluorooctyl methacrylate to n-butyl methacrylate is in a range of 1 to 8:1, it is possible to impart good waterproof properties to the solid-state electrolyte, and enable the solid-state battery to have a high conductivity retention and a high capacity, with optimal performance at 4:1. When tridecafluorooctyl methacrylate is present in insufficient amounts (for example, less than 1), the corresponding electrolyte coating will have poor waterproof properties, and the conductivity retention is low. Conversely, when tridecafluorooctyl methacrylate is excessive (for example, greater than 8), an absolute value of the conductivity is significantly affected, and the capacity is low.

In some embodiments, a thickness of the electrolyte coating is 20nm to 100nm, optionally 50nm, the reason being that when the thickness of the electrolyte coating is in a range of 20nm to 100nm, the conductivity performance of the solid-state battery is not affected, thereby allowing the solid-state battery to have a relatively high level of conductivity retention and capacity, and the solid-state battery reaches an optimal performance when the thickness of the electrolyte coating is 50nm. When the coating is too thin (for example, less than 20nm), the electrolyte coating has poor hydrophobicity, and the conductivity retention of the solid-state battery is poor. Conversely, when the coating is too thick (for example, greater than 100nm), the absolute value of the conductivity of the solid-state battery is dramatically affected, and the capacity is low.

In some specific embodiments, the sulfide electrolyte may be commercially available sulfide electrolytes, including but not limited to one or more of Li₇₋ₓPS₆₋ₓClₓ(0<x<2), Li₇₋ₓPS₆₋ₓBrₓ(0<x<2), etc.; and the halide electrolyte may be commercially available halide electrolytes, including but not limited to one or more of Li₃InCl₆, Li₃YCl₆, Li₂ZrCl₆, etc.

Other embodiments of the present disclosure provide a solid-state battery, including a positive electrode sheet, a negative electrode sheet, and a solid-state electrolyte, wherein a surface of the solid-state electrolyte is coated with the aforementioned electrolyte coating.

Still other embodiments of the present disclosure provide an electrical device, including the aforementioned solid-state battery.

By using the electrolyte coating provided by the present disclosure, the present disclosure significantly increases the stability of the sulfide electrolyte and the halide electrolyte in the air (even with high humidity) without substantially affecting the conductivity thereof, and further increases the conductivity retention and the capacity of the solid-state battery.

### DESCRIPTION OF THE EMBODIMENTS

By performing surface modification on an electrolyte coating of a sulfide electrolyte and a halide electrolyte, the present disclosure significantly increases the stability of the sulfide electrolyte and the halide electrolyte in the air (even with high humidity) without substantially affecting the conductivity thereof. In the present disclosure, a structure of the electrolyte coating is a copolymer of tridecafluorooctyl methacrylate and n-butyl methacrylate.

Specifically, the present disclosure provides an electrolyte coating, which is a hydrophobic coating for solid-state electrolytes. Specifically, the electrolyte coating is coated on a surface of the solid-state electrolyte, and the solid-state electrolyte includes one or both of the sulfide electrolyte and the halide electrolyte. In the present disclosure, the electrolyte coating is the copolymer of tridecafluorooctyl methacrylate (A) and n-butyl methacrylate (B). In the present disclosure, through a surface modification technology, that is, by performing surface modification on the electrolyte coating of the sulfide electrolyte and the halide electrolyte, the present disclosure significantly increases the stability thereof in the air (even with high humidity) without substantially affecting the conductivity thereof. In some specific embodiments, the sulfide electrolyte may be commercially available sulfide electrolytes, including but not limited to one or more of Li₇₋ₓPS₆₋ₓClₓ(0<x<2), Li₇₋ₓPS₆₋ₓBrₓ(0<x<2), etc.; and the halide electrolyte may be commercially available halide electrolytes, including but not limited to one or more of Li₃InCl₆, Li₃YCl₆, Li₂ZrCl₆, etc.

In some embodiments, a molar ratio of tridecafluorooctyl methacrylate (A) to n-butyl methacrylate (B) is 1 to 8:1, optionally 2 to 6:1, and further optionally 4:1. When the molar ratio of tridecafluorooctyl methacrylate to n-butyl methacrylate is in a range of 1 to 8:1, it is possible to impart good waterproof properties to the solid-state electrolyte, and enable the solid-state battery to have a high conductivity retention and a high capacity, with optimal performance at 4:1. When tridecafluorooctyl methacrylate is present in insufficient amounts (for example, less than 1), the corresponding electrolyte coating will have poor waterproof properties, and the conductivity retention is low. Conversely, when tridecafluorooctyl methacrylate is excessive (for example, greater than 8), an absolute value of the conductivity is significantly affected, and the capacity is low.

In some embodiments, a thickness of the electrolyte coating is 20nm to 100nm, optionally 50nm, the reason being that when the thickness of the electrolyte coating is in a range of 20nm to 100nm, the conductivity performance of the solid-state battery is not affected, thereby allowing the solid-state battery to have a relatively high level of conductivity retention and capacity, and the solid-state battery reaches an optimal performance when the thickness of the electrolyte coating is 50nm. When the coating is too thin (for example, less than 20nm), the electrolyte coating has poor hydrophobicity, and the conductivity retention of the solid-state battery is poor. Conversely, when the coating is too thick (for example, greater than 100nm), the absolute value of the conductivity of the solid-state battery is dramatically affected, and the capacity is low.

In addition, some embodiments of the present disclosure also provide a method for preparing the above electrolyte coating, including the following steps.

### (1) Method for preparing electrolyte coating

The electrolyte coating is a copolymer of tridecafluorooctyl methacrylate (A) and n-butyl methacrylate (B), and raw materials of the copolymer include polymerizable monomers tridecafluorooctyl methacrylate (A) and n-butyl methacrylate (B), an initiator and a solvent. An amount of the initiator may be set as conventionally adopted in the art, preferably 0.1% to 10% by mass of the polymerizable monomers, more preferably 0.5% to 1.5% by mass of the polymerizable monomers, for example 1%. The solvent is an organic solvent conventional in the art that can dissolve the above polymerizable monomers, such as N,N-dimethylformamide, N,N-dimethylacetamide, and so on. The initiator may be azobisisobutyronitrile (AIBN).

Preparation of copolymer: Tridecafluorooctyl methacrylate (A) and n-butyl methacrylate (B) were mixed in the solvent, the initiator was added thereto and stirred thoroughly to dissolve and form a solution. The solution was subjected to liquid nitrogen freezing and nitrogen gas blowing, with each step lasting half an hour and alternately cycling three times to remove moisture and air from the system, then stirred and reacted at 80°C in a nitrogen atmosphere for 24 hours to complete polymerization. Then the copolymer solution was poured into a large amount of diethyl ether to precipitate the copolymer while removing unreacted monomer impurities, etc. Then the product was dried in a vacuum oven at 80°C for 24 hours, wherein the molar ratio of tridecafluorooctyl methacrylate (A) to n-butyl methacrylate (B) is (1 to 8):1, optionally (2 to 6):1, further optionally 4:1.

### (2) Surface modification on solid-state electrolyte

Since the electrolyte coating of the copolymer prepared above has a relatively low melting point (60°C), it may be possible to heat the copolymer (to reach around 80°C) and spray the heated copolymer onto the surface of the sulfide electrolyte or the halide electrolyte. The sulfide electrolyte or the halide electrolyte may be coated by adopting conventional wet coating, or by selecting dry process film formation. The thickness of the electrolyte coating is 20 to 100nm, preferably 50nm.

Some embodiments of the present disclosure also provide a solid-state battery and an electrical device including the solid-state battery, wherein the solid-state battery includes a positive electrode sheet, a negative electrode sheet, and the solid-state electrolyte modified with the above electrolyte coating.

### Positive electrode sheet

The positive electrode sheet includes a positive electrode active material layer coated on a positive electrode current collector, a positive electrode conductive agent, and a positive electrode binder, etc. A preparation method of the positive electrode sheet and a ratio between various ingredients may be set according to conventional ratios, which are not limited herein. The positive electrode conductive agent is selected from one of carbon black, acetylene black, graphene, carbon nanotubes, carbon nanofibers, etc., or a combination of two or more mixed in any ratio. The positive electrode binder is selected from one of PVDF and its derivatives. The positive electrode active material is a positive electrode active material coated on the positive electrode current collector as conventionally understood in the art. In some embodiments, the type of positive electrode active material may be one or more of lithium iron phosphate (LFP), lithium manganese iron phosphate (LMFP), lithium cobalt oxide (LCO), lithium nickel oxide (LNO), lithium manganese oxide (LMO), lithium nickel manganese oxide (LNMO), lithium nickel cobalt manganese oxide (NCM), or lithium nickel cobalt aluminum oxide (NCA). Optionally, the positive electrode material is lithium nickel cobalt manganese oxide (NCM). In some embodiments, the positive electrode current collector may be aluminum foil.

### Negative electrode sheet

The negative electrode sheet includes a negative electrode active material layer coated on a negative electrode current collector, a negative electrode conductive agent, and a negative electrode binder, etc. A preparation method of the negative electrode sheet and a ratio between various ingredients may be set according to conventional ratios, which are not limited herein. The negative electrode active material is a negative electrode active material coated on the negative electrode current collector as conventionally understood in the art. In some embodiments, the type of the negative electrode active material may be one or more of graphite, silicon-carbon material, silicon-oxygen material, pure silicon, and may also be lithium metal and lithium metal alloys. Optionally, the negative electrode material is nanoscale pure silicon. The negative electrode current collector may be selected from a copper foil current collector. The type of negative electrode conductive agent is one or more of graphite, graphene, carbon black, carbon fiber, and carbon nanotube. The negative electrode binder includes at least one of polytetrafluoroethylene or polyimide.

### Solid-state electrolyte

The surface of the solid-state electrolyte is coated with the above electrolyte coating. In the present disclosure, the sulfide electrolyte may be a commercially available sulfide electrolyte, including but not limited to lithium phosphorus sulfur chloride, a lithium-rich lithium phosphorus sulfur chloride system, a chlorine-rich lithium phosphorus sulfur chloride system, or lithium phosphorus sulfur bromine, etc. In addition, the halide electrolyte may be a commercially available halide electrolyte, including but not limited to lithium indium chloride, lithium yttrium chloride, lithium zirconium chloride, etc.

### Solid-state battery

The positive electrode sheet, the solid-state electrolyte and the negative electrode sheet are placed into a mold in sequence for assembly. After assembly, a pressure is applied and a nut is tightened at the top of a column with a constant pressure to obtain the solid-state battery.

Note: The assembly process is completed in a glove box under the argon atmosphere, and particle diameters of corresponding powders of the positive electrode sheet, the solid-state electrolyte and the negative electrode sheet are all kept consistent.

It should be noted that the solid-state battery prepared by the above method is a lithium-ion secondary battery. However, the solid-state battery prepared by the present disclosure may also be a sodium-ion secondary battery or a potassium-ion secondary battery.

Those skilled in the art will understand that the battery preparation method described above is merely an example. Without departing from the content disclosed in the present disclosure, other methods commonly used in the art may be adopted.

The reagents and raw materials used in the present disclosure are all commercially available.

The present disclosure has no special requirements for the assembly method of the above battery, and assembly methods commonly known to those skilled in the art may be used. In addition, the above technical solution is not only applicable to commonly used all-solid-state lithium-ion batteries, but also applicable to various kinetic batteries such as all-solid-state sodium-ion batteries, all-solid-state potassium-ion batteries, etc. The above solid-state battery may be applied to any suitable electrical devices, including but not limited to electric vehicles, etc.

Some specific examples and comparative examples are listed below to better illustrate the present disclosure.

### Example 1

Preparation of solid-state electrolyte with surface modified electrolyte coating: Li₆PS₅Cl dry solid-state electrolyte was taken as an example, and an electrolyte coating was prepared on a surface thereof.

### Method for preparing electrolyte coating:

The electrolyte coating was a copolymer of tridecafluorooctyl methacrylate (A) and n-butyl methacrylate (B), and raw materials of the copolymer included polymerizable monomers tridecafluorooctyl methacrylate (A) and n-butyl methacrylate (B), an initiator and a solvent. An amount of the initiator was 1% by mass of polymerizable monomers. The solvent was an organic solvent conventionally capable of dissolving the above polymerizable monomers in the art, and N,N-dimethylformamide was adopted in this example.

Preparation of copolymer: Tridecafluorooctyl methacrylate (A) and n-butyl methacrylate (B) were mixed in the solvent, the initiator was added thereto and stirred thoroughly to dissolve and form a solution. The solution was subjected to liquid nitrogen freezing and nitrogen gas blowing, with each step lasting half an hour and alternately cycling three times to remove moisture and air from the system, then stirred and reacted at 80°C in a nitrogen atmosphere for 24 hours to complete polymerization. Then the copolymer solution was poured into a large amount of diethyl ether to precipitate the copolymer while removing unreacted monomer impurities, etc. Then the product was dried in a vacuum oven at 80°C for 24 hours, wherein the molar ratio of tridecafluorooctyl methacrylate (A) to n-butyl methacrylate (B) is 4:1.

### (2) Surface modification on solid-state electrolyte

The electrolyte coating of the above copolymer was heated and sprayed onto the surface of Li₆PS₅Cl dry solid-state electrolyte membrane, wherein the thickness of the electrolyte coating was 50nm.

### Positive electrode sheet

Preparation of positive electrode sheet: LiNi_{0.8}Co_{0.1}Mn_{0.1}O₂ (positive electrode active material), Super P (positive electrode conductive agent) and polyvinylidene fluoride (positive electrode binder) were mixed according to a mass ratio of 98:1:1, and N-methylpyrrolidone (solvent) was added into the mixture. The mixture was stirred by a vacuum stirrer until reaching a uniform and transparent state, thereby obtaining a positive electrode slurry. The positive electrode slurry was uniformly coated on the aluminum foil. The aluminum foil was dried at room temperature and then transferred to an oven for drying, and then subjected to cold pressing and cutting to obtain the positive electrode sheet.

### Negative electrode sheet

Preparation of negative electrode sheet: A negative electrode active material (97% artificial graphite and 3% silicon oxide compound SiOₓ (0<x<2)), a negative electrode conductive agent (Super P), a negative electrode thickener (sodium carboxymethyl cellulose (CMC-Na)), and a negative electrode binder (styrene-butadiene rubber (SBR)) were mixed according to a mass ratio of 96:1:1:2. Deionized water was added into the mixture. The mixture was fully stirred by the vacuum stirrer until reaching the uniform state, thus obtaining a negative electrode slurry. The negative electrode slurry was uniformly coated on a negative electrode current collector copper foil, dried at room temperature and then transferred to an oven for drying, and subjected to cold pressing, cutting and other processes to prepare the negative electrode sheet.

### Solid-state battery

The positive electrode sheet, the solid-state electrolyte and the negative electrode sheet were placed into a mold in sequence for assembly. After assembly, a pressure up to 100MPa was applied and a nut was tightened at the top of a column with a constant pressure to obtain the solid-state battery.

Note: The assembly process was completed in a glove box under the argon atmosphere, and particle diameters of corresponding powders of the positive electrode sheet, the solid-state electrolyte and the negative electrode sheet were all kept consistent.

### Example 2

The preparation method in Example 2 is consistent with that in Example 1, except that the molar ratio of tridecafluorooctyl methacrylate (A) to n-butyl methacrylate (B) in Example 2 is 1:1.

### Example 3

The preparation method in Example 3 is consistent with that in Example 1, except that the molar ratio of tridecafluorooctyl methacrylate (A) to n-butyl methacrylate (B) in Example 3 is 2:1.

### Example 4

The preparation method in Example 4 is consistent with that in Example 1, except that the molar ratio of tridecafluorooctyl methacrylate (A) to n-butyl methacrylate (B) in Example 4 is 3:1.

### Example 5

The preparation method in Example 5 is consistent with that in Example 1, except that the molar ratio of tridecafluorooctyl methacrylate (A) to n-butyl methacrylate (B) in Example 5 is 5:1.

### Example 6

The preparation method in Example 6 is consistent with that in Example 1, except that the molar ratio of tridecafluorooctyl methacrylate (A) to n-butyl methacrylate (B) in Example 6 is 6:1.

### Example 7

The preparation method in Example 7 is consistent with that in Example 1, except that the molar ratio of tridecafluorooctyl methacrylate (A) to n-butyl methacrylate (B) in Example 7 is 7:1.

### Example 8

The preparation method in Example 8 is consistent with that in Example 1, except that the molar ratio of tridecafluorooctyl methacrylate (A) to n-butyl methacrylate (B) in Example 8 is 8:1.

### Example 9

The preparation method in Example 9 is consistent with that in Example 1, except that the thickness of the electrolyte coating in Example 9 is 20nm.

### Example 10

The preparation method in Example 10 is consistent with that in Example 1, except that the thickness of the electrolyte coating in Example 10 is 30nm.

### Example 11

The preparation method in Example 11 is consistent with that in Example 1, except that the thickness of the electrolyte coating in Example 11 is 40nm.

### Example 12

The preparation method in Example 12 is consistent with that in Example 1, except that the thickness of the electrolyte coating in Example 12 is 60nm.

### Example 13

The preparation method in Example 13 is consistent with that in Example 1, except that the thickness of the electrolyte coating in Example 13 is 70nm.

### Example 14

The preparation method in Example 14 is consistent with that in Example 1, except that the thickness of the electrolyte coating in Example 14 is 80nm.

### Example 15

The preparation method in Example 15 is consistent with that in Example 1, except that the thickness of the electrolyte coating in Example 15 is 90nm.

### Example 16

The preparation method in Example 16 is consistent with that in Example 1, except that the thickness of the electrolyte coating in Example 16 is 100nm.

### Example 17

The preparation method in Example 17 is consistent with that in Example 1, except that the solid-state electrolyte in Example 17 adopts Li_{5.5}PS_{4.5}Cl and Li₆PS₅Br (in a mass ratio of 1:1).

### Example 18

The preparation method in Example 18 is consistent with that in Example 1, except that the solid-state electrolyte in Example 18 adopts Li₆PS₅Br.

### Example 19

The preparation method in Example 19 is consistent with that in Example 1, except that the solid-state electrolyte in Example 19 adopts Li₃InCl₆.

### Example 20

The preparation method in Example 20 is consistent with that in Example 1, except that the solid-state electrolyte in Example 20 adopts Li₃YCl₆.

### Example 21

The preparation method in Example 21 is consistent with that in Example 1, except that the solid-state electrolyte in Example 21 adopts Li₂ZrCl₆.

### Example 22

The preparation method in Example 22 is consistent with that in Example 1, except that the solid-state electrolyte in Example 22 adopts Li₆PS₅Cl and Li₃InCl₆ (in a mass ratio of 1:1).

### Comparative Example 1

The preparation method in Comparative Example 1 is consistent with that in Example 1, except that the molar ratio of tridecafluorooctyl methacrylate (A) to n-butyl methacrylate (B) in Comparative Example 1 is 0.5:1.

### Comparative Example 2

The preparation method in Comparative Example 2 is consistent with that in Example 1, except that the molar ratio of tridecafluorooctyl methacrylate (A) to n-butyl methacrylate (B) in Comparative Example 2 is 10:1.

### Comparative Example 3

The preparation method in Comparative Example 3 is consistent with that in Example 1, except that the thickness of the electrolyte coating in Comparative Example 3 is 10nm.

### Comparative Example 4

The preparation method in Comparative Example 4 is consistent with that in Example 1, except that the thickness of the electrolyte coating in Comparative Example 4 is 200nm.

### Comparative Example 5

The preparation method in Comparative Example 5 is consistent with that in Example 1, except that there is no electrolyte coating in Comparative Example 5.

### Performance test method

Thickness of coating: The thickness of coating was measured using SEM (SEM/JEOL JSM7610Fplus).

Water contact angle test: A 10µL of water drop was placed on the surface of an electrolyte membrane made from the solid-state electrolyte, and a contact angle measurement was conducted using a DSA-30 drop shape analysis system (Krüess).

Ion conductivity retention test: Different electrolyte membranes were placed in a glove box to test an initial conductivity 1. Then the electrolytes were placed in an environment at -40°C dew point for 24 hours to test a conductivity 2 of the electrolyte membranes. A value of the conductivity 2 divided by the conductivity 1 was the retention of the conductivity. Ion conductivity was tested by EIS using an electrochemical workstation, with stainless steel sheets as ion-blocking electrodes placed on both sides of the electrolyte membrane to fabricate ion-blocking batteries. A test frequency range was 10⁶ to 1Hz, amplitude 5mV, and the ion conductivity of the electrolyte membrane was calculated using a formula σ=L/(R*A), where L is a thickness of the electrolyte membrane, A is an effective area of the electrolyte membrane, R is a bulk resistance of the electrolyte membrane, which was determined by taking a resistance value at an intersection point where an EIS curve meets a real axis.

Cycle capacity retention test: Under a 25°C environment, cycle was performed for charge-discharge operations within a voltage range of 2.5 to 4.3V. After running the cycle to 1,000 cycles, a discharge capacity of the battery at this point is divided by the discharge capacity of the first cycle to determine a capacity retention rate of the battery under a charge-discharge rate of 1C/1C.

The test results are shown in Table 1 below.

**Table 1. Solid-state battery performance test results of Examples 1 to 22 and Comparative Examples 1 to 5**

| Group | Molar ratio of A: B | Thickness of electrolyte coating (nm) | Types of solid-state electrolyte | Water contact angle on surface of electrolyte membrane (°) | Ion conductivity retention at -40°C dew point after 24h (%) | Cycle capacity (mAh/g) |
|---|---|---|---|---|---|---|
| Example 1 | 4:1 | 50 | Li₆PS₅Cl | 137 | 90 | 220 |
| Example 2 | 1:1 | 50 | Li₆PS₅Cl | 99 | 78 | 225 |
| Example 3 | 2:1 | 50 | Li₆PS₅Cl | 113 | 83 | 223 |
| Example 4 | 3:1 | 50 | Li₆PS₅Cl | 125 | 90 | 222 |
| Example 5 | 5:1 | 50 | Li₆PS₅Cl | 139 | 91 | 213 |
| Example 6 | 6:1 | 50 | Li₆PS₅Cl | 141 | 92 | 201 |
| Example 7 | 7:1 | 50 | Li₆PS₅Cl | 143 | 93 | 190 |
| Example 8 | 8:1 | 50 | Li₆PS₅Cl | 145 | 93 | 182 |
| Example 9 | 4:1 | 20 | Li₆PS₅Cl | 135 | 82 | 224 |
| Example 10 | 4:1 | 30 | Li₆PS₅Cl | 129 | 84 | 223 |
| Example 11 | 4:1 | 40 | Li₆PS₅Cl | 133 | 87 | 222 |
| Example 12 | 4:1 | 60 | Li₆PS₅Cl | 137 | 91 | 217 |
| Example 13 | 4:1 | 70 | Li₆PS₅Cl | 137 | 92 | 209 |
| Example 14 | 4:1 | 80 | Li₆PS₅Cl | 138 | 92 | 200 |
| Example 15 | 4:1 | 90 | Li₆PS₅Cl | 138 | 92 | 194 |
| Example 16 | 4:1 | 100 | Li₆PS₅Cl | 139 | 91 | 186 |
| Example 17 | 4:1 | 100 | Li_{5.5}PS_{4.5}Cl and Li₆PS₅Br (mass ratio of 1:1) | 136 | 89 | 221 |
| Example 18 | 4:1 | 100 | Li₆PS₅Br | 135 | 88 | 216 |
| Example 19 | 4:1 | 100 | Li₃InCl₆ | 132 | 85 | 185 |
| Example 20 | 4:1 | 100 | Li₃YCl₆ | 130 | 83 | 178 |
| Example 21 | 4:1 | 100 | Li₂ZrCl₆ | 134 | 87 | 172 |
| Example 22 | 4:1 | 100 | Li₆PS₅Cl and Li₃InCl₆ (mass ratio of 1:1) | 137 | 89 | 199 |
| | | | | | | |
| Comparative Example 1 | 0.5:1 | 50 | Li₆PS₅Cl | 88 | 41 | 223 |
| Comparative Example 2 | 10:1 | 50 | Li₆PS₅Cl | 148 | 94 | 167 |
| Comparative Example 3 | 4:1 | 10 | Li₆PS₅Cl | 130 | 49 | 221 |
| Comparative Example 4 | 4:1 | 200 | Li₆PS₅Cl | 140 | 91 | 109 |
| Comparative Example 5 | - | - | Li₆PS₅Cl | 80 | 21 | 225 |

From the above Examples 1-22 and Comparative Example 5, it may be observed that, through the surface modification technology, i.e., by performing surface modification on the electrolyte coating of the sulfide electrolyte and the halide electrolyte, the present disclosure significantly increases the stability thereof in the air (even with high humidity) without substantially affecting the conductivity thereof. From Examples 1-22, it may be observed that through the use of the electrolyte coating provided in the present disclosure, the conductivity of the sulfide electrolyte and the halide electrolyte remains substantially unchanged after being placed in an environment at a dew point of -40°C for 24 hours, and the conductivity of the sulfide electrolyte and the halide electrolyte is decreased by less than 20% after being placed in a 50% humidity environment (wherein the 50% humidity environment means that the controlled humidity condition is 50% and the hygrometer displays 50%) for 24 hours. From Comparative Example 5, it can be observed that when no electrolyte coating is formed, the electrolyte membrane exhibits poor water resistance, resulting in particularly poor conductivity retention.

Specifically, by comparing Examples 1 to 8 with Comparative Examples 1-2, it may be obtained that when the molar ratio of tridecafluorooctyl methacrylate (A) to n-butyl methacrylate (B) is in the range of 1 to 8:1, it is possible to impart good waterproof properties to the electrolyte membrane, and enable the solid-state battery to exhibit a high level of conductivity retention and capacity, i.e., the conductivity retention of the solid-state battery after being placed in an environment at -40°C dew point for 24 hours is greater than 50%, and the original capacity thereof at 1C is greater than 180mAh/g. Furthermore, when the molar ratio of tridecafluorooctyl methacrylate (A) to n-butyl methacrylate (B) is in the range of 2 to 6:1, the waterproof properties of the electrolyte membrane as well as the conductivity retention and capacity of the solid-state battery are all excellent, and the optimal performance of waterproof properties of the electrolyte membrane as well as the conductivity retention and capacity of the solid-state battery is achieved when the molar ratio of tridecafluorooctyl methacrylate (A) to n-butyl methacrylate (B) is 4:1, with a water contact angle reaching 137°, conductivity retention reaching 90%, and original capacity at 1C being 220 mAh/g. From Comparative Example 1, it may be observed that when tridecafluorooctyl methacrylate is present in insufficient amounts (for example, less than 1), the corresponding electrolyte coating will have poor waterproof properties, and the conductivity retention is low. Conversely, when tridecafluorooctyl methacrylate is excessive (for example, greater than 8), the absolute value of the conductivity is significantly affected, and the capacity is low.

Furthermore, from Example 2, it may be observed that when the molar ratio of tridecafluorooctyl methacrylate (A) to n-butyl methacrylate (B) is 1:1, the capacity of the solid-state battery is high, with the original capacity at 1C being 225 mAh/g, which is because at this point, tridecafluorooctyl methacrylate (A) is relatively scarce, while n-butyl methacrylate (B) is relatively abundant, enabling the capacity of the solid-state battery to be high. From Example 8, it may be observed that when the molar ratio of tridecafluorooctyl methacrylate (A) to n-butyl methacrylate (B) is 8:1, the electrolyte coating exhibits a good waterproof performance, with a water contact angle reaching 145°, and the conductivity retention is as high as 93%, which is because at this point, tridecafluorooctyl methacrylate (A) is relatively abundant, while n-butyl methacrylate (B) is relatively scarce, enabling the solid-state battery to exhibit good waterproof properties and conductivity retention. It may be observed that in the present disclosure, tridecafluorooctyl methacrylate (A) serves as a waterproofing agent, whereas n-butyl methacrylate (B), having a low melting point, provides processability. Therefore, the ratio between these two components should be balanced. The greater the proportion of tridecafluorooctyl methacrylate (A), the more significant its impact on electrical conductivity.

By comparing Examples 9 to 16 with Comparative Examples 3-4, it may be known that the thickness of the electrolyte coating is 20nm to 100nm, optionally 50nm, which is because when the thickness of the electrolyte coating is in the range of 20nm to 100nm, it does not affect the conductivity performance of the solid-state battery, enabling both the conductivity retention and capacity of the solid-state battery to be high, and the performance of the solid-state battery reaches optimum when the thickness of the electrolyte coating is 50nm. From Comparative Example 3, it may be observed that when the electrolyte coating is too thin (for example, less than 20nm), the hydrophobic property of the electrolyte coating is poor, and the conductivity retention of the solid-state battery is poor as well. Conversely, from Comparative Example 4, it may be observed that when the electrolyte coating is too thick (for example, greater than 100nm), the effect on the absolute value of conductivity of the solid-state battery is too dramatic, and the capacity is low.

Furthermore, from Example 9, it may be observed that when the electrolyte coating is thin (20nm), the capacity of the solid-state battery is high (original capacity at 1C is 224mAh/g); while from Example 16, it may be observed that when the electrolyte coating is thick (100nm), the waterproof property of the solid-state battery is good, and the conductivity retention is high. Therefore, it is necessary to select the thickness of the electrolyte coating to enable the corresponding performance to achieve a good balance. In the present disclosure, when the thickness of the electrolyte coating is 50nm, all performances of the solid-state battery are excellent.

From Examples 17 to 22, it may be observed that in the present disclosure, the sulfide electrolyte includes one or more of Li₇₋ₓPS₆₋ₓClₓ(0<x<2) and Li₇₋ₓPS₆₋ₓBrₓ(0<x<2), and the halide electrolyte includes one or more of Li₃InCl₆, Li₃YCl₆, and Li₂ZrCl₆. The present disclosure solves the problem of instability of the above sulfide electrolyte and halide electrolyte in the air through surface modification technology, reducing the effect of moisture in the air on the electrochemical performance thereof.

## Claims

1. An electrolyte coating, coated on a surface of a solid-state electrolyte, the solid-state electrolyte comprising one or both of a sulfide electrolyte and a halide electrolyte,
wherein the electrolyte coating is a copolymer of tridecafluorooctyl methacrylate and n-butyl methacrylate.

2. The electrolyte coating according to claim 1, wherein a molar ratio of the tridecafluorooctyl methacrylate to the n-butyl methacrylate is 1 to 8:1.

3. The electrolyte coating according to claim 2, wherein the molar ratio of the tridecafluorooctyl methacrylate to the n-butyl methacrylate is 2 to 6:1.

4. The electrolyte coating according to claim 2, wherein the molar ratio of the tridecafluorooctyl methacrylate to the n-butyl methacrylate is 4:1.

5. The electrolyte coating according to claim 1, wherein a thickness of the electrolyte coating is 20nm to 100nm.

6. The electrolyte coating according to claim 5, wherein the thickness of the electrolyte coating is 50nm.

7. The electrolyte coating according to claim 1, wherein the sulfide electrolyte comprises one or more of Li₇₋ₓPS₆₋ₓClₓ(0<x<2) and Li₇₋ₓPS₆₋ₓBrₓ(0<x<2).

8. The electrolyte coating according to claim 1, wherein the halide electrolyte comprises one or more of Li₃InCl₆, Li₃YCl₆, and Li₂ZrCl₆.

9. A solid-state battery, comprising a positive electrode sheet, a negative electrode sheet, and a solid-state electrolyte, wherein a surface of the solid-state electrolyte is coated with the electrolyte coating according to any one of claims 1-8.

10. An electrical device, comprising the solid-state battery according to claim 9.
